# EUROPEAN PATENT SPECIFICATION

(11) **EP 2 469 423 B1**
(45) Date of publication and mention of the grant of the patent: **11.09.2019**
(21) Application number: 11004931.9
(22) Date of filing: 16.06.2011
(51) Int. Cl.: G06F 16/2455

(54) **AGGREGATION IN PARALLEL COMPUTATION ENVIRONMENTS WITH SHARED MEMORY**
AGGREGATION IN PARALLELEN BERECHNUNGSUMGEBUNGEN MIT GEMEINSAM GENUTZTEM SPEICHER
AGRÉGATION DANS DES ENVIRONNEMENTS INFORMATIQUES PARALLÈLES AVEC MÉMOIRE PARTAGÉE

(30) Priority: 23.12.2010 US 978194
(43) Date of publication of application: 27.06.2012
(73) Proprietor: SAP SE, 69190 Walldorf (DE)
(72) Inventor: Transier, Frederik, 69190 Walldorf (DE); Mathis, Christian, 69190 Walldorf (DE); Bohnsack, Nico, 69190 Walldorf (DE); Stammerjohann, Kai, 69190 Walldorf (DE); Sanders, Peter, 69190 Walldorf (DE); Müller, Ingo, 69190 Walldorf (DE)
(74) Representative: Müller-Boré & Partner Patentanwälte PartG mbB

(56) References cited:
- US-A- 5 850 547
- US-A- 5 884 299
- US-A1- 2008 162 409

## Description

### FIELD

Some embodiments relate to a data structure. More specifically, some embodiments provide a method and system for using a data structure for performing parallelized aggregation in parallel computing environments.

### BACKGROUND

A number of presently developed and developing computer systems include multiple processors in an attempt to provide increased computing performance. Advances in computing performance, including for example processing speed and throughput, may be provided by parallel computing systems and devices as compared to single processing systems that sequentially process programs and instructions.

For parallel shared-memory aggregation processes, a number of approaches have been proposed. However, the previous approaches each include sequential operations and/or synchronization operations such as, locking, to avoid inconsistencies or lapses in data coherency. Thus, prior proposed solutions for parallel aggregation in parallel computation environments with shared memory either contain a sequential step or require some sort of synchronization on the data structures.

Accordingly, a method and mechanism for efficiently processing data in parallel computation environments and the use of same in parallel aggregation processes are provided by some embodiments herein.

This problem is solved by a computer-implemented method according to claim 1, a computer program product according to claim 4, and a system according to claim 5. Preferred embodiments are defined in the dependent claims.

US 2008/0162409 A1 discloses that iterate-aggregate shape queries are executable in an efficient parallel manner. Techniques are utilized that leverage properties of aggregations to implement such a query in a highly parallelized manner utilizing one or both of vertical and horizontal parallelism. More specifically, queries can be recursively evaluated in parallel utilizing partitioning and repartitioning mechanisms. Distributed query execution results over a subset of input data are repartitioned and aggregated to produce a final result.

### BRIEF DESCRIPTION OF THE DRAWINGS

FIG. 1 is block diagram of a system according to some embodiments.
FIG. 2 is a block diagram of an operating environment according to some embodiments.
FIGS. 3A - 3D are illustrative depictions of various aspects of a data structure according to some embodiments.
FIG. 4 is a flow diagram of a method relating to a data structure, according to some embodiments herein.
FIGS. 5A - 5D provide illustrative examples of some data tables according to some embodiments.
FIG. 6 is an illustrative depiction of an aggregation flow, in some embodiments herein.
FIG. 7 is a flow diagram of a method relating to an aggregation flow, according to some embodiments herein.

### DETAILED DESCRIPTION

In an effort to more fully and efficiently use the resources of a particular computing environment, a data structure and techniques of using that data structure may be developed to fully exploit the design characteristics and capabilities of that particular computing environment. In some embodiments herein, a data structure and techniques for using that data structure (i.e., algorithms) are provided for efficiently using the data structure disclosed herein in a parallel computing environment with shared memory.

As used herein, the term *parallel computation environment with shared memory* refers to a system or device having more than one processing unit. The multiple processing units may be processors, processor cores, multi-core processors, etc. All of the processing units can access a main memory (i.e., a shared memory architecture). All of the processing units can run or execute the same program(s). As used herein, a running program may be referred to as a *thread.* Memory may be organized in a hierarchy of multiple levels, where faster but smaller memory units are located closer to the processing units. The smaller and faster memory units located nearer the processing units as compared to the main memory are referred to as *cache.*

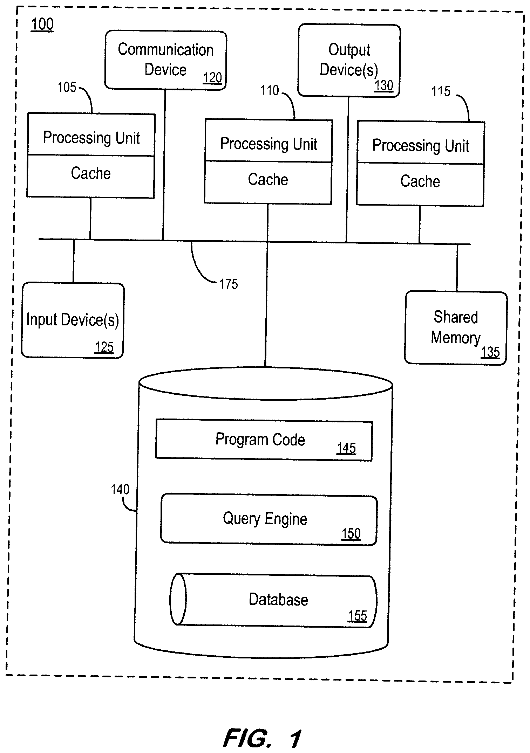

FIG. 1 is a block diagram overview of a device, system, or apparatus 100 that may be used in a providing an index hash table or hash map in accordance with some aspects and embodiments herein, as well as providing a parallel aggregation based on such data structures. System 100 may be, for example, associated with any of the devices described herein and may include a plurality of processing units 105, 110, and 115. The processing units may comprise one or more commercially available Central Processing Units (CPUs) in form of one-chip microprocessors or a multi-core processor, coupled to a communication device 120 configured to communicate via a communication network (not shown in FIG. 1) to a end client (not shown in FIG. 1). Device 100 may also include a local cache memory associated with each of the processing units 105, 110, and 115 such as RAM memory modules. Communication device 120 may be used to communicate, for example, with one or more client devices or business service providers. System 100 further includes an input device 125 (e.g., a mouse and/or keyboard to enter content) and an output device 130 (e.g., a computer monitor to display a user interface element).

Processing units 105, 110, and 115 communicates with a shared memory 135 via a system bus 175. System bus also provides a mechanism for the processing units to communicate with a storage device 140. Storage device 140 may include any appropriate information storage device, including combinations of magnetic storage devices (*e.g*., a hard disk drive), optical storage devices, and/or semiconductor memory devices for storing data and programs.

Storage device 140 stores a program 145 for controlling the processing units 105, 110, and 115 and query engine application 150 for executing queries. Processing units 105, 110, and 115 may perform instructions of the program 145 and thereby operate in accordance with any of the embodiments described herein. For example, the processing units may concurrently execute a plurality of execution threads to build the index hash table data structures disclosed herein. Furthermore, query engine 150 may operate to execute a parallel aggregation operation in accordance with aspects herein in cooperation with the processing units and by accessing database 155. Program 145 and other instructions may be stored in a compressed, uncompiled and/or encrypted format. Program 645 may also include other program elements, such as an operating system, a database management system, and/or device drivers used by the processing units 105, 110, and 115 to interface with peripheral devices.

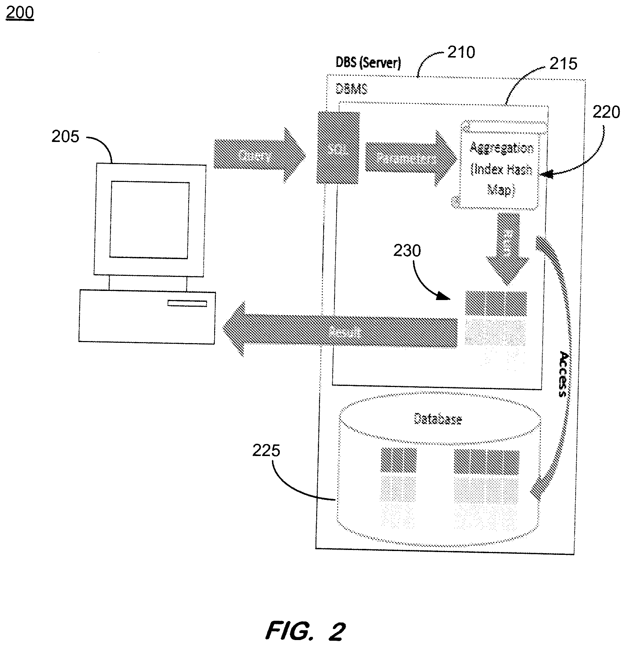

In some embodiments, storage device 140 includes a database 155 to facilitate the execution of queries based on input table data. The database may include data structures (e.g., index hash tables), rules, and conditions for executing a query in a parallel computation environment such as that of FIGS. 1 and 2.

In some embodiments, the data structure disclosed herein as being developed for use in parallel computing environments with shared memory is referred to as a *parallel hash table.* In some instances, the parallel hash table may also be referred to as a parallel hash map. In general, a hash table may be provided and used as index structures for data storage to enable fast data retrieval. The parallel hash table disclosed herein may be used in a parallel computation environment where multiple concurrently executing (i.e., running) threads insert and retrieve data in tables. Furthermore, an aggregation algorithm that uses the parallel hash tables herein is provided for computing an aggregate in a parallel computation environment.

FIG. 2 provides an illustrative example of a computation environment 100 compatible with some embodiments herein. While computation environment 100 may be compatible with some embodiments of the data structures and the methods herein, the data structures and the methods herein are not limited to the example computation environment 100. Processes to store, retrieve, and perform operations on data may be facilitated by a database system (DBS) and a database warehouse (DWH).

As shown in FIG. 2, DBS 210 is a server. DBS 210 further includes a database management system (DBMS) 215. DBMS 215 may comprise software (e.g., programs, instructions, code, applications, services, etc.) that controls the organization of and access to database 225 that stores data. Database 225 may include an internal memory, an external memory, or other configurations of memory. Database 225 may be capable of storing large amounts of data, including relational data. The relational data may be stored in tables. In some embodiments, a plurality of clients, such as example client 205, may communicate with DBS 210 via a communication link (e.g., a network) and specified application programming interfaces (APIs). In some embodiments, the API language provided by DBS 210 is SQL, the Structured Query Language. Client 205 may communicate with DBS 210 using SQL to, for example, create and delete tables; insert, update, and delete data; and query data.

In general, a user may submit a query from client 205 in the form of a SQL query statement to DBS 210. DBMS 215 may execute the query by evaluating the parameters of the query statement and accessing database 225 as needed to produce a result 230. The result 230 may be provided to client 205 for storage and/or presentation to the user.

One type of query is an aggregation query. As will be explained in greater detail below, a parallel aggregation algorithm, process, or operation may be used to compute SQL aggregates. In general with reference to FIG. 2, some embodiments herein may include client 205 wanting to group or aggregate data of a table stored in database 225 (e.g., a user at client 205 may desire to know the average salaries of the employees in all of a company's departments). Client 205 may connect to DBS 210 and issue a SQL query statement that describes and specifies the desired aggregation. DBMS 215 may create a executable instance of the parallel aggregation algorithm herein, provide it with the information needed to run the parallel aggregation algorithm (e.g., the name of a table to access, the columns to group by, the columns to aggregate, the aggregation function, etc.), and run the parallel aggregation operation or algorithm. In the process of running, the parallel aggregation algorithm herein may create an index hash map 220. The index hash map may be used to keep track of intermediate result data. An overall result comprising a result table may be computed based on the index hash map(s) containing the intermediate results. The overall parallel aggregation result may be transmitted to client 205.

As an extension of FIG. 2, DWHs may be built on top of DBSs. Thus, a use-case of a DWH may be similar in some respects to DBS 210 of FIG. 2.

The computation environment of FIG. 2 may include a plurality of processors that can operate concurrently, in parallel and include a device or system similar to that described in FIG. 1. Additionally, the computation environment of FIG. 2 may have a memory that is shared amongst the plurality of processors, for example, like the system of FIG. 1. In order to fully capitalize on the parallel processing power of such a computation environment, the data structures used by the system may be designed, developed or adapted for being efficiently used in the parallel computing environment.

A hash table is a fundamental data structure in computer science that is used for mapping "keys" (e.g., the names of people) to the associated values of the keys (e.g., the phone number of the people) for fast data look-up. A conventional hash table stores key - value pairs. Conventional hash tables are designed for sequential processing.

However, for parallel computation environments there exists a need for data structures particularly suitable for use in the parallel computing environment. In some embodiments herein, the data structure of an *index hash map* is provided. In some aspects, the index hash map provides a lock-free cache-efficient hash data structure developed to parallel computation environments with shared memory. In some embodiments, the index hash map may be adapted to column stores.

In a departure from conventional hash tables that store key - value pairs, the index hash map herein does not store key - value pairs. The index hash map herein generates key - index pairs by mapping each distinct key to a unique integer. In some embodiments, each time a new distinct key is inserted in the index hash map, the index hash map increments an internal counter and assigns the value of the counter to the key to produce a key - index pair. The counter may provide, at any time, the cardinality of an input set of keys that have thus far been inserted in the hash map. In some respects, the key - index mapping may be used to share a single hash map among different columns (or value arrays). For example, for processing a plurality of values distributed among different columns, the associated index for the key has to be calculated just once. The use of key - index pairs may facilitate bulk insertion in columnar storages. Inserting a set of key - index pairs may entail inserting the keys in a hash map to obtain a mapping vector containing indexes. This mapping vector may be used to build a value array per value column.

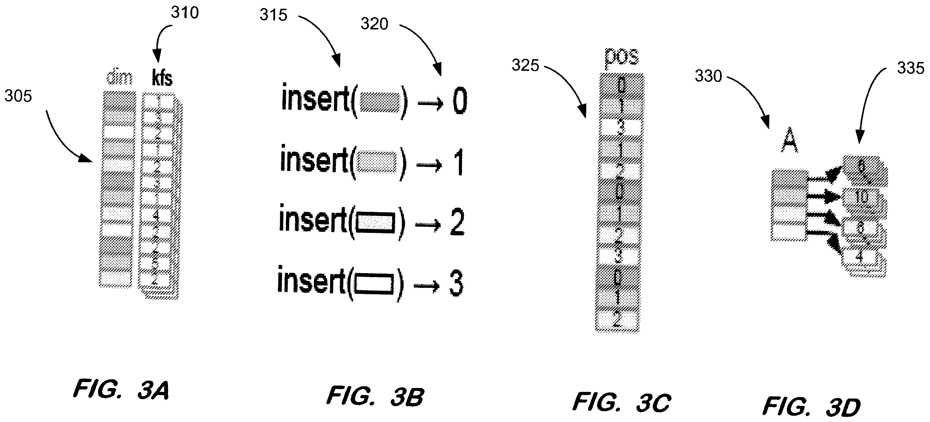

Referring to FIGS. 3A - 3D, input data is illustrated in FIG. 3A including a key array 305. For each distinct key 315 from keys array 305, the index hash map returns an index 320 (i.e., a unique integer), as seen in FIG. 3B. When all of the keys, from a column for example, have been inserted in the hash map, the mapping vector of FIG. 3C results. The entries in the mapping of FIG. 3C are the indexes that point to a value array "A"330 illustrated in FIG. 3D. The mapping of FIG. 3C may be used to aggregate the "Kf" columns 310 shown in FIG. 3A. The result of the aggregation of column 310 is depicted in FIG. 3D at 335.

To achieve a maximum parallel processor utilization, the index hash maps herein may be designed to avoid locking when being operated on by concurrently executing threads by producing wide data independence. In some embodiments, index hash maps herein may be described by a framework defining a two step process. In a first step, input data is split or separated into equal-sized blocks and the blocks are assigned to worker execution threads. These worker execution threads may produce intermediate results by building relatively small local hash tables or hash maps. The local hash maps are private to the respective thread that produces it. Accordingly, other threads may not see or access the local hash map produced by a given thread.

In a second step, the local hash maps including the intermediate results may be merged to obtain a global result by concurrently executing merger threads. When accessing and processing the local hash maps, each of the merger threads may only consider a dedicated range of hash values. The merger threads may process hash-disjoint partitions of the local hash maps and produce disjoint result hash tables that may be concatenated to build an overall result.

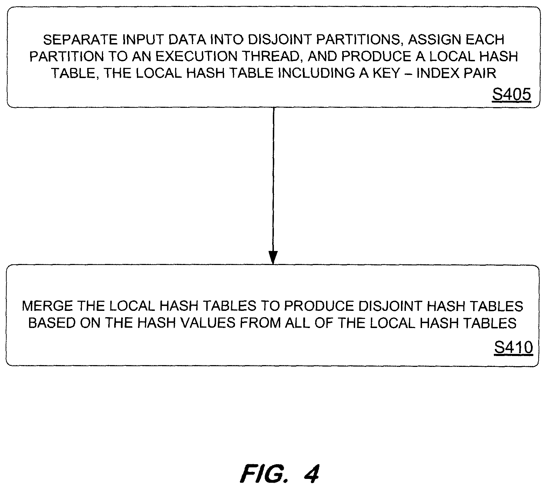

FIG. 4 is a flow diagram related to a data structure framework 400, in accordance with some embodiments herein. At S405, an input data table is separated or divided into a plurality of partitions. The size of the partitions may relate to or even be the size of a memory unit such as, for example, a cache associated with parallel processing units. In some embodiments, the partitions are equal in size. Furthermore, a first plurality of execution threads running in parallel may each generate a local hash table or hash map. Each of the local hash maps is private to the one of the plurality of threads that generated the local hash map.

The second step of the data structure framework herein is depicted in FIG. 4 at S410. At S410, the local hash maps are merged. The merging of the local hash maps produces a set of disjoint result hash tables or hash maps.

In the embodiments, when accessing and processing the local hash maps, each of the merger threads only considers a dedicated range of hash values. From a logical perspective, the local hash maps may be considered as being partitioned by their hash value. One implementation may use, for example, some first bits of the hash value to form a range of hash values. The same ranges are used for all local hash maps, thus the "partitions" of the local hash maps are disjunctive. As an example, if a value "a" is in range 5 of a local hash map, then the value will be in the same range of other local hash maps. In this manner, all identical values of all local hash maps may be merged into a single result hash map. Since the "partitions" are disjunctive, the merged result hash maps may be created without a need for locks. Additionally, further processing on the merged result hash maps may be performed without locks since any execution threads will be operating on disjunctive data.

In some embodiments, the local (index) hash maps providing the intermediate results may be of a fixed size. Instead of resizing a local hash map, the corresponding worker execution thread may replace its local hash map with a new hash map when a certain load factor is reached and place the current local hash map into a buffer containing hash maps that are ready to be merged. In some embodiments, the size of the local hash maps may be sized such that the local hash maps fit in a cache (e.g., L2 or L3). The specific size of the cache may depend on the sizes of caches in a given CPU architecture.

In some aspects, insertions and lookups of keys may largely take place in cache. In some embodiments, over-crowded areas within a local hash map may be avoided by maintaining statistical data regarding the local hash maps. The statistical data may indicate when the local hash map should be declared full (independent of an actual load factor). In some aspects and embodiments, the size of a buffer of a computing system and environment holding local hash maps ready to be merged is a tuning parameter, wherein a smaller buffer may induce more merge operations while a larger buffer will necessarily require more memory.

In some embodiments, a global result may be organized into bucketed index hash maps where each result hash map includes multiple fixed-size physical memory blocks. In this configuration, cache-efficient merging may be realized, as well as memory allocation being more efficient and sustainable since allocated blocks may be shared between queries. In some aspects, when a certain load factor within a global result hash map is reached during a merge operation, the hash map may be resized. Resizing a hash map may be accomplished by increasing its number of memory blocks. Resizing of a bucketed index hash map may entail needing to know the entries to be repositioned. In some embodiments, the maps' hash function may be chosen such that its codomain increases by adding further least significant bits of need during a resize operation. In an effort to avoid too many resize operations, an estimate of a final target size may be determined before an actual resizing of the hash map.

In some embodiments, the index hash map framework discussed above may provide an infrastructure to implement parallelized query processing algorithms or operations. One embodiment of a parallelized query processing algorithm includes a hash-based aggregation, as will be discussed in greater detail below.

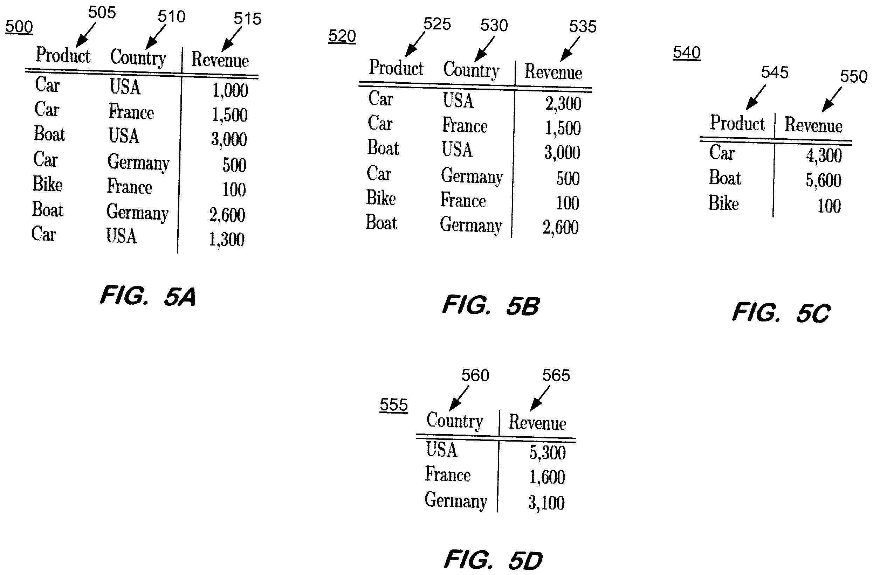

In some embodiments, a parallelized aggregation refers to a relational aggregation that groups and condenses relational data stored in tables. An example of a table that may form an input of a parallel aggregation operation herein is depicted in FIG. 5A. Table 500 includes sales data. The sales data is organized in three columns - a Product column 505, a Country column 510, and a Revenue column 15. Table 500 may be grouped and aggregated by, for example, three combinations of columns - by Product and Country, by Product, and by Country. In the following discussion the columns by which an aggregation groups the data is referred to as *group columns.*

Aggregation result tables determined by the three different groupings are illustrated in FIGS. 5B - 5D. Each of the result tables 520, 540, and 555 contain the distinct values (groups) of the desired group columns and, per group, the aggregated value. For example, table 520 includes the results based on grouping by Product and Country. Columns 525 and 530 include the distinct Product and Country values (i.e., groups) of the desired Product and Country columns (FIG. 5A, columns 505 and 510) and the aggregated value for each distinct Product and Country group is included in column 535. Furthermore, table 540 includes the results based on grouping by Product. Column 545 includes the distinct Product values (i.e., groups) of the desired Product column (FIG. 5A, column 505) and the aggregated value for each distinct Product group. Table 555 includes the results based on grouping by Country where columns 560 and 565 include the distinct Country values (i.e., groups) of the desired Country
column (FIG. 5A, column 510) and the aggregated value for each distinct Country group.

In some embodiments, such as the examples of FIGS. 5A - 5D, a summation function SUM is used to aggregate values. However, other aggregation functions such as, for example and not as a limitation, a COUNT, a MIN, a MAX, and an AVG aggregation function may be used. The column containing the aggregates may be referred to herein as the *aggregate column.* Thus, the aggregate columns in FIGS. 5B - 5D are columns 535, 550, and 565, respectively.

In an effort to fully utilize the resources of parallel computing environments with shared memory, an aggregation operation should be computed and determined in parallel. In an instance the aggregation is not computed in parallel, the processing performance for the aggregation would be bound by the speed of a single processing unit instead of being realized by the multiple processing units available in the parallel computing environment.

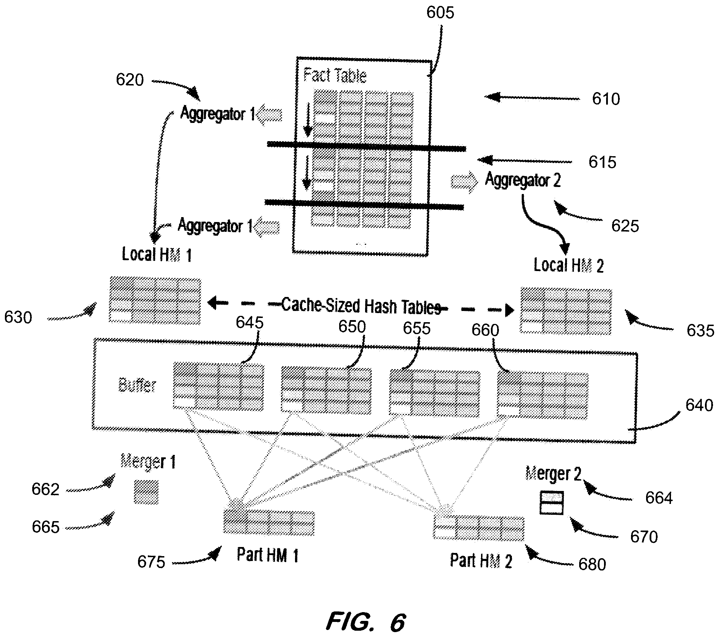

FIG. 6 is an illustrative depiction of a parallel aggregation flow, according to some embodiments herein. In some aspects, the parallel aggregation flow uses the index hash table framework discussed herein above. In the example of FIG. 6, two degrees of parallelism are depicted and are achieved by the concurrent execution of two execution threads. However, the concepts conveyed by FIG. 6 may be extended to additional degrees of parallelism, including computation environments now known and those that become known in the future. In FIG. 6, input table 605 is separated into a plurality of partitions. Input table 605 is shown divided into partitions 610 and 615. All of or a portion of table 605 may be split into partitions for parallel aggregation. Portions of table 605 not initially partitioned and processed by a parallel aggregation operation may subsequently be partitioned for parallel aggregation processing. Table 605 may be partitioned into equal-sized partitions. Partitions 610 and 615 are but two example partitions, and additional partitions may exist and be processed in the parallel aggregation operations herein.

In some embodiments, a first plurality of execution threads, aggregator threads, are initially running and a second plurality of execution threads are not initially running or are in a sleep state. The concurrently operating aggregator threads operate to fetch an exclusive part of table 605. Partition 610 is fetched by aggregator thread 620 and partition 615 is fetched by aggregator thread 625.

Each of the aggregator threads may read their partition and aggregate the values of each partition into a private local hash table or hash map. Aggregator thread 620 produces private hash map 630 and aggregator thread 625 produces local hash map 635. Since each aggregator thread processes its own separate portion of input table 605, and has its private hash map, the parallel processing of the partitions may be accomplished lock-free.

In some embodiments, the local hash tables may be the same size as the cache associated with the processing unit executing an aggregator thread. Sizing the local hash tables in this manner may function to avoid cache misses. In some aspects, input data may be read from table 605 to aggregate and written to the local hash tables row-wise or column-wise.

When a partition is consumed by an aggregator thread, the aggregator thread may fetch another, unprocessed partition of input table 605. In some embodiments, the aggregator threads move their associated local hash maps into a buffer 640 when the local hash table reaches a threshold size, initiate a new local hash table, and proceed.

In some embodiments, when the number of hash tables in buffer 640 reaches a threshold size, the aggregator threads may wake up a second plurality of execution threads, referred to in the present example as merger threads, and the aggregator threads may enter a sleep state. In some embodiments, the local hash maps may be retained in buffer 640 until the entire input table 605 is consumed by the aggregations threads 620 and 625. When the entire input table 605 is consumed by the aggregator threads 620 and 625, the second plurality of execution threads, the merger threads, are awaken and the aggregator threads enter a sleep state.

Each of the merger threads is responsible for a certain partition of all of the private hash maps in buffer 640. The particular data partition each merger thread is responsible for may be determined by assigning distinct, designated key values of the local hash maps to each of the merger threads. That is, the partition of the data of the portion the data for which each merger thread is responsible may be determined by "key splitting" in the local hash maps. As illustrated in FIG. 6, merger thread 1 is responsible for designated keys 665 and merger thread 2 is responsible for keys 670. Each of the merger threads 1 and 2 operate to iterate over all of the private hash maps in buffer 640, read their respective data partition as determined by the key splitting, and merge their respective data partition into a thread-local part hash table (or part hash map).

As further illustrated in FIG. 6, merger thread 1 (662) and merger thread 2 (664) each consider all of the private hash maps in buffer 640 based on the key based partitions they are each responsible for and produce, respectively, part hash map 1 (675) and part hash map 2 (680).

In some embodiments, in the instance a merger thread has processed its data partition and there are additional data partitions in need of being processed, the executing merger threads may acquire responsibility for a new data partition and proceed to process the new data partition as discussed above. In the instance all data partitions are processed, the merger threads may enter a sleep state and the aggregator threads may return to an active, running state. Upon returning to the active, running state, the processes discussed above may repeat.

In the instance there is no more data to be processed by the aggregator threads and the merger threads, the parallel aggregation operation herein may terminate. The results of the aggregation process will be contained in the set of part hash maps (e.g., 675 and 680). In some respects, the part hash maps may be seen as forming a *parallel result* since the part hash maps are disjoint.

In the embodiments, the part hash maps are processed in parallel. As an example, a *having* clause may be evaluated and applied to every group or parallel sorting and merging may be performed thereon.

An overall result is obtained from the disjoint part hash maps by concatenating them together.

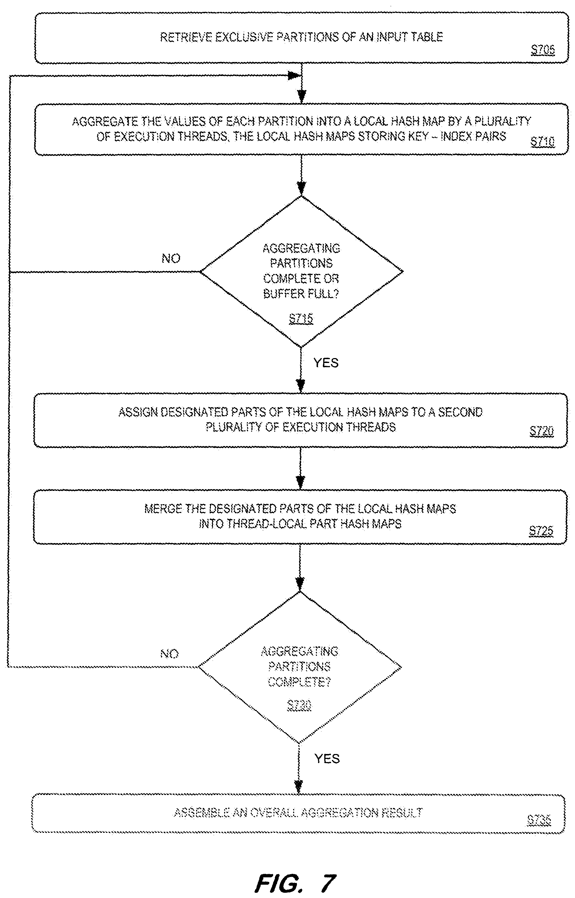

FIG. 7 is an illustrative example of a flow diagram relating to some parallel aggregation embodiments herein. At S705, exclusive partitions of an input data table are received or retrieved for aggregating in parallel. At S710 the values of each of the exclusive partitions are aggregated. In some embodiments, the values of each partition are aggregated into a local hash map by one of a plurality of concurrently running execution threads.

At S715 a determination is made whether the aggregating of the partitions of the input table partitions is complete or whether the buffer is full. In the instance additional partitions remain to be aggregated and buffer 640 is not full, whether at the end of aggregating a current partition and/or for other considerations, the process returns to further aggregate partitions of the input data and store the aggregated values in key - index pairs in local hash tables. In the instance aggregating of the partitions is complete or the buffer is full, the process proceeds to assign designated parts of the local hash tables or hash maps to a second plurality of execution threads at S720. The second plurality of execution threads work to merge the designated parts of the local hash maps into thread-local part hash maps at S725 and to produce result tables.

At S730, a determination is made whether the aggregating is complete. In the instance the aggregating is not complete, the process returns to further aggregate partitions of the input data. In the instance aggregating is complete, the process proceeds S735.

At S735, the process operates to generate a global result by assembling the results obtained at S725 into a composite result table. In the embodiments, the overall result is produced by concatenating the part hash maps of S725 to each other.

According to an aspect, a computer implemented method is provided. The method comprises separating an input table into a plurality of partitions. The method further comprises generating, by each of a first plurality of execution threads operating concurrently, a local hash table for each of the partitions, each local hash table storing key - index pairs. The method further comprises merging the local hash tables, by a second plurality of execution threads operating concurrently, to produce a set of disjoint result hash tables.

In the method, each distinct key is mapped to a unique integer.

In addition, it may be that the partitions of the input table are disjoint.

Also, it may be that the local hash table generated by each of the first plurality of execution threads is private to the execution thread that generated it and is independent of other local hash tables.

Moreover, each of the second plurality of execution threads processes a dedicated range of hash values of all of the local hash tables.

In some cases, the local hash tables are of a fixed size.

Furthermore, the method comprises concatenating the set of disjoint result hash tables to obtain an overall result.

Optionally, the plurality of first execution threads further retrieves another partition of the input table when a previously retrieved partition is consumed by the plurality of first execution threads. It may be that the plurality of first execution threads moves the local hash tables to a buffer when a hash table becomes a threshold size, initializes a new local hash table, and proceeds to retrieve another partition of the input table.

According to another aspect, a system is provided. The system comprises a plurality of processing units. The system further comprises a shared memory accessible by all of the plurality of processing units. The system further comprises a database to store an input table, and a query engine to execute a query. Executing the query comprises separating the input table into a plurality of partitions, generating, by each of a first plurality of execution threads executing concurrently by the plurality of processing units, a local hash table for each of the partitions, each local hash table storing key - index and merging the local hash tables, by a second plurality of execution threads executing concurrently by the plurality of processing units, to produce a set of disjoint result hash tables.

Also, each distinct key may be mapped to a unique integer.

In addition, it may be that the partitions of the input table are disjoint.

Moreover, each of the second plurality of execution threads are responsible for a dedicated range of hash values of all of the local hash tables.

In some cases, the local hash table generated by each of the first plurality of execution threads is private to the execution thread that generated it and is independent of other local hash tables.

Furthermore, each of the second plurality of execution threads processes a dedicated range of hash values of all of the local hash tables.

In some cases, the local hash tables are of a fixed size.

Also, executing the query further comprises concatenating the set of disjoint result hash tables to obtain an overall result.

In some cases, the plurality of first execution threads further retrieve another partition of the input table when a previously retrieved partition is consumed by the plurality of first execution threads. Also, the plurality of first execution threads may move the local hash tables to a buffer when a hash table becomes a threshold size, initializes a new local hash table, and proceeds to retrieve another partition of the input table.

Each system described herein may be implemented by any number of devices in communication via any number of other public and/or private networks. Two or more of the devices herein may be co-located, may be a single device, or may be located remote from one another and may communicate with one another via any known manner of network(s) and/or a dedicated connection. Moreover, each device may comprise any number of hardware and/or software elements suitable to provide the functions described herein as well as any other functions. Other topologies may be used in conjunction with other embodiments.

All systems and processes discussed herein may be embodied in program code stored on one or more computer-readable media. Such media may include, for example, a floppy disk, a CD-ROM, a DVD-ROM, magnetic tape, and solid state Random Access Memory (RAM) or Read Only Memory (ROM) storage units. According to some embodiments, a memory storage unit may be associated with access patterns and may be independent from the device (e.g., magnetic, optoelectronic, semiconductor/solid-state, etc.) Moreover, in-memory technologies may be used such that databases, etc. may be completely operated in RAM memory at a processor. Embodiments are therefore not limited to any specific combination of hardware and software.

Embodiments have been described herein solely for the purpose of illustration. Persons skilled in the art will recognize from this description that embodiments are not limited to those described, but may be practiced with modifications and alterations limited only by the scope of the appended claims. Moreover, various modifications to the described embodiments may be made. In particular, elements of one embodiment may be combined and used in other embodiments to form new embodiments.

## Claims

1. A computer implemented method for performing parallelized aggregation, comprising:
separating (S405) an input table (500, 605) storing relational data into a plurality of partitions (610, 615);
generating (S405), by each of a plurality of aggregator threads (620, 625) operating concurrently, a local hash table (220, 630, 635) for each of the partitions, each local hash table (220, 630, 635, 645, 650, 655, 660) storing key - index pairs,
wherein the key - index pairs are generated by mapping each distinct key (315) from a column (305) of a partition to a unique integer representing the index (320),
aggregating (S710) values of each of the partitions (610, 615) into the local hash tables (220, 630, 635),
wherein the mapping is used to group and condense relational data stored in a partition (610, 615) so that the index (320) points to a value array (330) including an intermediate result of the aggregation;
merging (S410), based on designated key values (665, 670) of the local hash tables (220, 630, 635, 645, 650, 655, 660) assigned to each thread of a plurality of merger threads (662, 664), the local hash tables (220, 630, 635, 645, 650, 655, 660), by the plurality of merger threads (662, 664) operating concurrently,
wherein the plurality of merger threads (662, 664) processes hash-disjoint partitions of data of the local hash tables (220, 630, 635, 645, 650, 655, 660) to produce a set of disjoint result hash tables (675, 680),
wherein each of the plurality of merger threads (662, 664) processes a dedicated range of key values (665, 670) of all of the local hash tables (220, 630, 635, 645, 650, 655, 660); and
generating (S735) a global result by concatenating the set of disjoint result hash tables (675, 680) produced by the plurality of merger threads (662, 664).

2. The method of claim 1, wherein the local hash table (220, 630, 635) generated by each of the plurality of aggregator threads (620, 625) is private to the aggregator thread (620, 625) that generated it and is independent of other local hash tables (220, 630, 635).

3. The method of any one of claims 1 to 2, wherein the local hash tables (220, 630, 635) are sized such that the local hash tables (220, 630, 635) fit in a cache (640).

4. A computer program product comprising computer-readable instructions, which, when loaded and executed on a computer system, cause the computer system to perform operations according to the method of any one of the preceding claims.

5. A system (100), comprising:
a plurality of processing units (105, 110, 115);
a shared memory (135) accessible by all of the plurality of processing units (105, 110, 115);
a database (155) to store an input table (500, 605) storing relational data; and
a query engine (150) to execute a parallelized aggregation query comprising:
separating (S405) the input table (500, 605) into a plurality of partitions (610, 615);
generating (S405), by each of a plurality of aggregator threads (620, 625) executing concurrently by the plurality of processing units (105, 110, 115), a local hash table (220, 630, 635, 645, 650, 655, 660) for each of the partitions, each local hash table (220, 630, 635) storing key - index pairs,
wherein the key - index pairs are generated by mapping each distinct key (315) from a column (305) of a partition to a unique integer representing the index (320),
aggregating (S710) the values of each of the partitions (610, 615) into the local hash tables (220, 630, 635),
wherein the mapping is used to group and condense relational data stored in a partition (610, 615) so that the index (320) points to a value array (330) including an intermediate result of the aggregation;
merging (S410), based on designated key values (665, 670) of the local hash tables (220, 630, 635, 645, 650, 655, 660) assigned to each thread of a plurality of merger threads (662, 664), the local hash tables (220, 630, 635, 645, 650, 655, 660), by the plurality of merger threads (662, 664) executing concurrently by the plurality of processing units (105, 110, 115),
wherein the plurality of merger threads (662, 664) processes hash-disjoint partitions of data of the local hash tables (220, 630, 635, 645, 650, 655, 660) to produce a set of disjoint result hash tables (675, 680),
wherein each of the plurality of merger threads (662, 664) processes a dedicated range of key values (665, 670) of all of the local hash tables (220, 630, 635, 645, 650, 655, 660); and
generating (S735) a global result by concatenating the set of disjoint result hash tables (675, 680) produced by the plurality of merger threads (662, 664).

6. The system of claim 5, wherein the local hash table (220, 630, 635) generated by each of the plurality of aggregator threads (620, 625) is private to the aggregator thread (620, 625) that generated it and is independent of other local hash tables (220, 630, 635).

7. The system of any one of claims 5 to 6, wherein the local hash tables (220, 630, 635) are sized such that the local hash tables (220, 630, 635) fit in a cache (640).

## Patentansprüche

1. Ein computerimplementiertes Verfahren zum Durchführen einer parallelisierten Aggregation, das Folgendes umfasst:
Trennen (S405) einer Eingabetabelle (500, 605), die relationale Daten speichert, in eine Vielzahl von Partitionen (610, 615);
Erzeugen (S405), durch jeden aus einer Vielzahl von gleichzeitig arbeitenden Aggregator-Threads (620, 625), einer lokalen Hash-Tabelle (220, 630, 635) für jede der Partitionen, wobei jede lokale Hash-Tabelle (220, 630, 635, 645, 650, 655, 660) Schlüssel-Index-Paare speichert,
wobei die Schlüssel-Index-Paare durch Mappen jedes einzelnen Schlüssels (315) aus einer Spalte (305) einer Partition auf eine eindeutige ganze Zahl erzeugt werden, die den Index (320) darstellt,
Aggregieren (S710) von Werten jeder der Partitionen (610, 615) in die lokalen Hash-Tabellen (220, 630, 635),
wobei das Mappen verwendet wird, um in einer Partition (610, 615) gespeicherte relationale Daten zu gruppieren und zu verdichten, sodass der Index (320) auf eine Wertarray (330) zeigt, der ein Zwischenergebnis der Aggregation beinhaltet;
Zusammenführen (*merging*) (S410), basierend auf bestimmten Schlüsselwerten (665, 670) der lokalen Hash-Tabellen (220, 630, 635, 645, 650, 655, 660), die jedem Thread einer Vielzahl von Merger-Threads (662, 664) zugeordnet sind, der lokalen Hash-Tabellen (220, 630, 635, 645, 650, 655, 660) durch die Vielzahl von gleichzeitig arbeitenden Merger-Threads (662, 664),
wobei die Vielzahl von Merger-Threads (662, 664) Hash-Disjoint-Partitionen von Daten der lokalen Hash-Tabellen (220, 630, 635, 645, 650, 655, 660) verarbeitet, um einen Satz von disjunkten Ergebnis-Hash-Tabellen (675, 680) zu erzeugen,
wobei jeder der Vielzahl von Merger-Threads (662, 664) einen dedizierten Bereich von Schlüsselwerten (665, 670) aller lokalen Hash-Tabellen (220, 630, 635, 645, 650, 655, 660) verarbeitet; und
Erzeugen (S735) eines globalen Ergebnisses durch Verketten des Satzes von disjunkten Ergebnis-Hash-Tabellen (675, 680), die durch die Vielzahl von Merger-Threads (662, 664) erzeugt werden.

2. Das Verfahren nach Anspruch 1, wobei die lokale Hash-Tabelle (220, 630, 635), die durch jeden der Vielzahl von Aggregator-Threads (620, 625) erzeugt wird, für den Aggregator-Thread (620, 625), der sie erzeugt hat, privat ist und von anderen lokalen Hash-Tabellen (220, 630, 635) unabhängig ist.

3. Das Verfahren nach irgendeinem der Ansprüche von 1 bis 2, wobei die lokalen Hash-Tabellen (220, 630, 635) so bemessen sind, dass die lokalen Hash-Tabellen (220, 630, 635) in einen Cache (640) passen.

4. Ein Computerprogrammprodukt, das computerlesbare Anweisungen umfasst, die, wenn sie in ein Computersystem geladen und dort ausgeführt werden, bewirken, dass das Computersystem Operationen gemäß dem Verfahren nach irgendeinem der vorstehenden Ansprüche ausführt.

5. Ein System (100), das Folgendes umfasst:
eine Vielzahl von Verarbeitungseinheiten (105, 110, 115);
einen gemeinsamen Speicher (135), der von allen der Vielzahl von Verarbeitungseinheiten (105, 110, 115) zugänglich ist;
eine Datenbank (155) zum Speichern einer Eingabetabelle (500, 605), die relationale Daten speichert; und
eine Abfrage-Engine (150) zum Ausführen einer parallelisierten Aggregationsabfrage, die Folgendes umfasst:
Trennen (S405) der Eingabetabelle (500, 605) in eine Vielzahl von Partitionen (610, 615);
Erzeugen (S405), durch jeden aus einer Vielzahl von Aggregator-Threads (620, 625), die gleichzeitig von der Vielzahl von Verarbeitungseinheiten (105, 110, 115) ausgeführt werden, einer lokalen Hash-Tabelle (220, 630, 635, 645, 650, 655, 660) für jede der Partitionen, wobei jede lokale Hash-Tabelle (220, 630, 635) Schlüssel-Index-Paare speichert,
wobei die Schlüssel-Index-Paare durch Mappen jedes einzelnen Schlüssels (315) von einer Spalte (305) einer Partition auf eine eindeutige ganze Zahl erzeugt werden, die den Index (320) darstellt,
Aggregieren (S710) der Werte jeder der Partitionen (610, 615) in die lokalen Hash-Tabellen (220, 630, 635),
wobei das Mappen verwendet wird, um in einer Partition (610, 615) gespeicherte relationale Daten zu gruppieren und zu verdichten, sodass der Index (320) auf eine Wertarray (330) zeigt, der ein Zwischenergebnis der Aggregation beinhaltet;
Zusammenführen (*merging*) (S410), basierend auf bestimmten Schlüsselwerten (665, 670) der lokalen Hash-Tabellen (220, 630, 635, 645, 650, 655, 660), die jedem Thread einer Vielzahl von Merger-Threads (662, 664) zugeordnet sind, der lokalen Hash-Tabellen (220, 630, 635, 645, 650, 655, 660) durch die Vielzahl von Merger-Threads (662, 664), die durch die Vielzahl von Verarbeitungseinheiten (105, 110, 115) gleichzeitig ausgeführt werden,
wobei die Vielzahl von Merger-Threads (662, 664) Hash-Disjoint-Partitionen von Daten der lokalen Hash-Tabellen (220, 630, 635, 645, 650, 655, 660) verarbeitet, um einen Satz von disjunkten Ergebnis-Hash-Tabellen (675, 680) zu erzeugen,
wobei jeder der Vielzahl von Merger-Threads (662, 664) einen dedizierten Bereich von Schlüsselwerten (665, 670) aller lokalen Hash-Tabellen (220, 630, 635, 645, 650, 655, 660) verarbeitet; und
Erzeugen (S735) eines globalen Ergebnisses durch Verketten des Satzes von disjunkten Ergebnis-Hash-Tabellen (675, 680), die durch die Vielzahl von Merger-Threads (662, 664) erzeugt werden.

6. Das System nach Anspruch 5, wobei die lokale Hash-Tabelle (220, 630, 635), die durch jeden der Vielzahl von Aggregator-Threads (620, 625) erzeugt wird, für den Aggregator-Thread (620, 625), der sie erzeugt hat, privat ist und unabhängig ist von anderen lokalen Hash-Tabellen (220, 630, 635).

7. Das System nach irgendeinem der Ansprüche von 5 bis 6, wobei die lokalen Hash-Tabellen (220, 630, 635) so bemessen sind, dass die lokalen Hash-Tabellen (220, 630, 635) in einen Cache (640) passen.

## Revendications

1. Un procédé mis en oeuvre par ordinateur pour effectuer une agrégation parallélisée, comprenant le fait de :
séparer (S405) une table d'entrée (500, 605) stockant des données relationnelles en une pluralité de partitions (610, 615) ;
générer (S405), par chacun d'une pluralité de threads d'agrégateur (620, 625) opérant simultanément, une table de hachage locale (220, 630, 635) pour chacune des partitions, chaque table de hachage locale (220, 630, 635, 645, 650, 655, 660) stockant des paires clé - index,
sachant que les paires clé - index sont générées en mappant chaque clé distincte (315) depuis une colonne (305) d'une partition à un entier unique représentant l'index (320),
agréger (S710) des valeurs de chacune des partitions (610, 615) dans les tables de hachage locales (220, 630, 635),
sachant que le mappage est utilisé pour grouper et condenser des données relationnelles stockées dans une partition (610, 615) de manière que l'index (320) pointe vers un réseau de valeurs (*value array*) (330) incluant un résultat intermédiaire de l'agrégation ;
fusionner (*merging*) (S410), sur la base de valeurs clés désignées (665, 670) des tables de hachage locales (220, 630, 635, 645, 650, 655, 660) affectées à chaque thread d'une pluralité de threads de fusion (*merger threads*) (662, 664), les tables de hachage locales (220, 630, 635, 645, 650, 655, 660), par la pluralité des threads de fusion (662, 664) opérant simultanément,
sachant que la pluralité de threads de fusion (662, 664) traite des partitions disjointes par hachage (*hash-disjoint partitions*) de données des tables de hachage locales (220, 630, 635, 645, 650, 655, 660) pour produire un ensemble de tables de hachage de résultats disjoints (*disjoint result hash tables*) (675, 680),
sachant que chacun de la pluralité de threads de fusion (662, 664) traite une plage dédiée de valeurs clés (665, 670) de toutes les tables de hachage locales (220, 630, 635, 645, 650, 655, 660) ; et de
générer (S735) un résultat global en concaténant l'ensemble de tables de hachage de résultats disjoints (675, 680) produites par la pluralité de threads de fusion (662, 664).

2. Le procédé d'après la revendication 1, sachant que la table de hachage locale (220, 630, 635) générée par chacun de la pluralité de threads d'agrégateur (620, 625) est privée par rapport au thread d'agrégateur (620, 625) qui l'a générée et est indépendante des autres tables locales (220, 630, 635).

3. Le procédé d'après l'une quelconque des revendications de 1 à 2, sachant que les tables de hachage locales (220, 630, 635) sont dimensionnées de manière que les tables de hachage locales (220, 630, 635) tiennent dans un cache (640).

4. Un produit programme informatique comprenant des instructions lisibles par ordinateur, qui, lorsqu'elles sont chargées et exécutées sur un système informatique, amènent le système informatique à effectuer des opérations conformément au procédé d'après l'une quelconque des revendications précédentes.

5. Un système (100), comprenant :
une pluralité d'unités de traitement (105, 110, 115) ;
une mémoire partagée (135) accessible par l'ensemble de la pluralité d'unités de traitement (105, 110, 115) ;
une base de données (155) pour stocker une table d'entrée (500, 605) stockant des données relationnelles ; et
un moteur de requête (150) pour exécuter une requête d'agrégation parallélisée comprenant le fait de :
séparer (S405) la table d'entrée (500, 605) en une pluralité de partitions (610, 615) ;
générer (S405), par chacun d'une pluralité de threads d'agrégateur (620, 625) exécutant simultanément par la pluralité d'unités de traitement (105, 110, 115), une table de hachage locale (220, 630, 635, 645, 650, 655, 660) pour chacune des partitions, chaque table de hachage locale (220, 630, 635) mémorisant des paires clé- index,
sachant que les paires clé - index sont générées en mappant chaque clé distincte (315) depuis une colonne (305) d'une partition à un entier unique représentant l'index (320),
agréger (S710) des valeurs de chacune des partitions (610, 615) dans les tables de hachage locales (220, 630, 635),
sachant que le mappage est utilisé pour grouper et condenser des données relationnelles stockées dans une partition (610, 615) de manière que l'index (320) pointe vers un tableau de valeurs (330) incluant un résultat intermédiaire d'agrégation ;
fusionner (S410), sur la base de valeurs clés désignées (665, 670) des tables de hachage locales (220, 630, 635, 645, 650, 655, 660) affectées à chaque thread d'une pluralité de threads de fusion (662, 664), les tables de hachage locales (220, 630, 635, 645, 650, 655, 660), par la pluralité des threads de fusion (662, 664) exécutés simultanément par la pluralité des unités de traitement (105, 110, 115),
sachant que la pluralité de threads de fusion (662, 664) traite des partitions disjointes par hachage (*hash-disjoint partitions*) de données des tables de hachage locales (220, 630, 635, 645, 650, 655, 660) pour produire un ensemble de tables de hachage de résultats disjoints (*disjoint result hash tables*) (675, 680),
sachant que chacun de la pluralité de threads de fusion (662, 664) traite une plage dédiée de valeurs clés (665, 670) de toutes les tables de hachage locales (220, 630, 635, 645, 650, 655, 660) ; et de
générer (S735) un résultat global en concaténant l'ensemble de tables de hachage de résultats disjoints (675, 680) produites par la pluralité de threads de fusion (662, 664).

6. Le système d'après la revendication 5, sachant que la table de hachage locale (220, 630, 635) générée par chacun de la pluralité de threads d'agrégateur (620, 625) est privée par rapport au thread d'agrégateur (620, 625) qui l'a générée et est indépendante des autres tables de hachage locales (220, 630, 635).

7. Le système d'après l'une quelconque des revendications de 5 à 6, sachant que les tables de hachage locales (220, 630, 635) sont dimensionnées de manière que les tables de hachage locales (220, 630, 635) tiennent dans un cache (640).
